# EUROPÄISCHE PATENTSCHRIFT

(11) **EP 1 364 737 B1**
(45) Veröffentlichungstag und Bekanntmachung des Hinweises auf die Patenterteilung: **30.03.2005**
(21) Anmeldenummer: 03011300.5
(22) Anmeldetag: 17.05.2003
(51) Int. Cl.: B23K 9/10, H02M 3/00

(54) **Stromquelle für ein Lichtbogenschweisssystem**
Arc welding power source
Source de courant pour le soudage à l'arc

(30) Priorität: 22.05.2002 DE 10223024
(43) Veröffentlichungstag der Anmeldung: 26.11.2003
(73) Patentinhaber: Metabowerke GmbH, 72622 Nürtingen (DE)
(72) Erfinder: Ley, Christoph, Dipl.-Ing., 26935 Stadland (DE); Burgholte, Alwin, Prof. Dipl.-Ing., 26389 Wilhelmshafen (DE); Horn, Christian, 27283 Verden (DE)
(74) Vertreter: Gesthuysen, von Rohr & Eggert

(56) Entgegenhaltungen:
- WO-A-97/01211
- US-A- 6 023 416
- US-A1- 2001 042 739

## Beschreibung

Die Erfindung betrifft eine Stromquelle für ein Lichtbogenschweißsystem gemäß dem Oberbegriff von Patentanspruch 1 sowie ein Verfahren zur Erzeugung eines Schweißstroms gemäß dem Oberbegriff von Anspruch 10.

Die Stromquelle für ein Lichtbogenschweißsystem hat die Aufgabe, die für den Schweißvorgang benötigten Ströme und Spannungen aus einer Versorgungsspannung zu generieren. Hierbei ist insbesondere zu berücksichtigen, daß die Versorgungsspannung starken Schwankungen unterliegt, die den Schweißprozeß jedoch nicht beeinträchtigen dürfen. Weiter stellen die hohen gesetzlichen Anforderungen an die elektromagnetische Verträglichkeit (EMV) ein nicht unerhebliches Problem bei der Entwicklung derartiger Stromquellen dar. Dies wird besonders deutlich, wenn man die hohen beim Lichtbogenschweißen entstehenden Ströme betrachtet. Verschärft wird diese Problematik durch die zunehmende Tendenz, die in Rede stehenden Stromquellen als flexible, verlustarme und preiswerte Schaltstromquellen auszuführen, wodurch häufig hohe Stromund/oder Spannungsschaltflanken entstehen, die wiederum der elektromagnetischen Verträglichkeit entgegenstehen.

Die EP 0 970 775 A2 zeigt eine Schaltstromquelle für ein Lichtbogenschweißsystem, mit dem in Teilen eine Reduzierung der oben genannten Probleme erreichbar ist. Die Stromquelle weist hier einen netzspannungsgespeisten Gleichrichter auf, der mit dem Eingang eines Zwischenkreises gekoppelt ist. Der Zwischenkreis weist wiederum einen Ausgang auf, der mit dem Eingang eines getakteten Stromwandlers gekoppelt ist. An dem Ausgang des Stromwandlers ist ggf. über eine Induktivität eine Schweißelektrode anschließbar.

Der Zwischenkreis ist vorliegend derart ausgestaltet, daß durch den Zwischenkreis aus der gleichgerichteten Versorgungsspannung eine bestimmte Zwischenkreisgleichspannung generiert wird, die weitgehend unabhängig vom zeitlichen Verlauf der Versorgungsspannung ist. Diese feste Zwischenkreisspannung wird dem Stromwandler zugeführt, der an seinem Ausgang den gewünschten Schweißstrom bzw. die gewünschte Schweißspannung bereitstellt.

Der Zwischenkreis bewirkt insofern eine Entkopplung des Stromwandlers von der Versorgungsspannung, als daß die Zwischenkreisspannung bei nahezu jeder Versorgungsspannung und bei allen vorgesehenen Lastfällen konstant bleibt. Hierfür weist der Zwischenkreis einen Aufwärtswandler auf, der gleichzeitig die Funktion eines Leistungsfaktor-Vorreglers übernimmt. Der Leistungsfaktor-Vorregler, auch PFC (Power-Factor-Correction) genannt, bewirkt, daß der Netzstrom weitgehend unabhängig von der Belastung am Ausgang des Zwischenkreises i. w. sinusförmig in Phase mit der Netzspannung gehalten wird. Das Ziel ist es hierbei, einen Leistungsfaktor (cos ϕ) mit einem Wert gegen 1 zu erhalten.

Um die bei einem Aufwärtswandler grundsätzlich auftretenden hohen Schaltflanken zu reduzieren, ist es im Zwischenkreis vorgesehen, die entsprechenden Halbleiterschalter derart mit Hilfsschaltkreisen zu beschalten, daß ein weiches Schalten, "soft switching", gewährleistet wird. Hierfür ist ein "snubber"-Schaltkreis vorgesehen, der den Spannungsanstieg über einem Schalter beim Abschalten und den Stromanstieg durch einen Schalter beim Einschalten verlangsamt.

Der mit dem Ausgang des Zwischenkreises verbundene Stromwandler ist ebenfalls als Aufwärtswandler ausgestaltet, der wiederum die genannten Hilfsschaltkreise aufweist.

Der Nachteil der oben beschriebenen ansonsten leistungsstarken Stromquelle besteht offenkundig darin, daß der Aufwand zur Reduzierung von Schaltverlusten sowie zur Vermeidung steiler Schaltflanken hoch ist und eine beträchtliche Anzahl zusätzlicher Halbleiterbauteile erfordert.

Eine weitere bekannte Stromquelle erzeugt nicht die genannten Schaltverluste oder steilen Schaltflanken (DE 44 11 227 A1). Die Stromquelle weist hier einen netzspannungsgespeisten Gleichrichter mit Gleichspannungsausgang, einen Zwischenkreis mit Eingang und Ausgang sowie einen getakteten Stromwandler mit Eingang und Ausgang auf. Der Eingang des Zwischenkreises ist mit dem Gleichspannungsausgang des Gleichrichters gekoppelt, wobei der Zwischenkreis vorliegend als Tiefpaß ausgestaltet ist. Der Eingang des Stromwandlers ist mit dem Ausgang des Zwischenkreises gekoppelt. Der Stromwandler weist die gleiche Struktur wie ein Halbbrücken-Durchflußwandler auf, der sekundärseitig über einen Gleichrichter mit einem Resonanzschaltkreis beschaltet ist. Der Resonanzschaltkreis besteht hier aus einer Induktivität, die in Reihe mit einer Kapazität geschaltet ist. Auf der Primärseite des Stromwandlers sind zwei Halbleiterschalter vorgesehen, die beide gleichzeitig mit einer Rechteckspannung angesteuert werden. Beim Einschalten der Halbleiterschalter fließt ein sinusförmiger Strom durch die Primärseite des Stromwandlers, der durch den Strom durch den Resonanzschaltkreis auf der Sekundärseite bestimmt wird. Die Einschaltzeit der Halbleiterschalter ist dabei mindestens so groß wie die halbe Periodendauer der Sinusschwingung. Durch den sekundärseitigen Gleichrichter wird der Strom nach Durchlaufen einer positiven Halbwelle auf Null geführt. Das Abschalten der beiden Halbleiterschalter erfolgt genau in diesem Zeitraum, so daß die Schaltverluste entsprechend gegen Null gehen.

Die Steuerung des Effektivwerts der für den Schweißprozeß bereitgestellten Stromstärke läßt sich bei der oben genannten Stromquelle durch die Variation der Einschaltzeit der Halbleiterschalter erreichen. Nachteilig ist bei dieser Art der Steuerung der Stromstärke die Tatsache, daß beim Einstellen einer geringen Stromstärke die Abstände zwischen zwei sinusförmigen Halbwellen größer werden. Dies ist insbesondere dann, wenn der am Ausgang des Stromwandlers verfügbare Strom gleichgerichtet wird, unvorteilhaft, da sich eine resultierende Welligkeit ("ripple") nicht vermeiden läßt.

Eine weitere bekannte Anordnung (US 6,023,416 A) zeigt einen ähnlichen Aufbau. Hier ist der Zwischenkreis allerdings als Hoch-Tiefsetzsteller ausgestaltet, dessen Ausgangsspannung auf einen vorbestimmten Wert eingestellt wird. Auch hier läßt sich die oben beschriebene Welligkeit im Stromverlauf nicht vermeiden.

Schließlich ist eine Stromquelle (WO 97/01211 A1) bekannt, die ebenfalls einen Zwischenkreis mit einer einstellbaren Ausgangsspannung aufweist. Bei dieser den Ausgangspunkt der Erfindung bildenden Stromquelle ist es allerdings vorgesehen, die Ausgangsspannung des Zwischenkreises als zusätzlichen Freiheitsgrad bei der Steuerung der Stromquelle zu nutzen.

Nachteilig ist bei allen bekannten Stromquellen die Tatsache, daß deren Verhalten im Leerlaufzustand, in dem die Gefahr der Sättigung im Transformatorkern besonders groß ist, nicht zufriedenstellend ist.

Die Problemstellung der vorliegenden Erfindung besteht darin, eine Stromquelle anzugeben, bei der der erzeugte Schweißstrom über einen weiten Bereich bei gleichbleibender Signalqualität steuerbar ist und bei der das Leerlaufverhalten optimiert ist.

Die vorliegende Problemstellung wird zunächst durch eine Stromquelle gemäß Anspruch 1 gelöst.

Wesentlich ist, daß die am Ausgang des Zwischenkreises anliegende Zwischenkreisspannung veränderlich ist. Hierfür weist der Zwischenkreis einen Zwischenkreissteller auf, der innerhalb eines bestimmten Spannungsbereichs aus der gleichgerichteten Netzspannung eine weitgehend beliebige Gleichspannung erzeugen kann. Damit ergibt sich die Möglichkeit, den Schweißstrom aus zeitlich aufeinanderfolgenden, i. w. sinusförmigen Stromhalbwellen zusätzlich durch die Zwischenkreisspannung zu steuern.

Mit der Steuerung der Zwischenkreisspannung und der Steuerung der Schaltvorgänge im Stromwandler ist eine Steuerung des Schweißstroms in zwei Freiheitsgraden möglich. Dies ist insbesondere dann vorteilhaft, wenn der Schweißstrom reduziert werden soll, ohne zu lange Pausenzeiten zwischen den Stromhalbwellen entstehen zu lassen. In einem solchen Fall lassen sich derartige lange Pausenzeiten mit der resultierenden Welligkeit im gleichgerichteten Schweißstrom durch eine Reduzierung der Zwischenkreisspannung vermeiden.

Wesentlich ist weiter, daß eine Triggereinrichtung zur Ermittlung des Leerlaufzustands des Stromwandlers vorgesehen ist, durch die im Leerlaufzustand dafür gesorgt wird, daß die Induktivität des Resonanzschaltkreises mit einer vergleichsweise geringen Spannung beaufschlagt wird. Hierdurch läßt sich die Sättigung im Transformatorkern während des Leerlaufzustands auf einfache Weise vermeiden.

Der Stromwandler ist hier als Resonanzwechselrichter ausgebildet. Resonanzwechselrichter als solche sind aus dem Stand der Technik bekannt. Bei derartigen Wechselrichtern sorgt ein Resonanzschaltkreis dafür, daß die im Stromwandler vorhandenen Schalter im Stromnulldurchgang geschaltet werden können, so daß Schaltverluste sowie steile Schaltflanken vermieden werden. Es gibt natürlich eine Vielzahl von Möglichkeiten, die Lehre der Erfindung auszugestalten und weiterzubilden. Dazu darf auf die Unteransprüche verwiesen werden.

Eine besonders flexible Ausgestaltung ergibt sich dann, wenn der Zwischenkreissteller als Hochsetzsteller oder als Hoch-Tiefsetzsteller mit variabler Ausgangsspannung ausgestaltet ist, insbesondere wenn dieser als Leistungsfaktor-Vorregler (PFC) ausgestaltet ist. In dieser speziellen Ausgestaltung zeigt sich die volle Leistungsfähigkeit des vorliegenden Konzepts. Neben den oben genannten Vorzügen hinsichtlich der Steuerbarkeit ergibt sich nun zusätzlich die Möglichkeit, unerwünschte Rückwirkungen auf das Versorgungsnetz zu vermeiden.

Für eine besonders komfortable Handhabung der Stromquelle durch den Benutzer ist eine Steuerungseinrichtung zur Ansteuerung des Zwischenkreisstellers und/oder des Stromwandlers vorgesehen. Durch die Steuerungseinrichtung sind einerseits die Schaltzeitpunkte der im Stromwandler enthaltenen Halbleiterschalter und, in weiterer bevorzugter Ausgestaltung, die Zwischenkreisspannung steuerbar. Wenn dann zusätzlich eine Meßeinrichtung zur Messung des Ausgangsstroms und/oder der Ausgangsspannung des Stromwandlers vorgesehen ist, kann die Steuerungseinrichtung die Funktion eines Reglers für die Regelgrößen Schweißstrom und/oder Schweißspannung übernehmen.

Für eine komfortable Bedienung der Stromquelle durch den Benutzer ist es nach besonders bevorzugter Ausgestaltung vorgesehen, daß die Steuerungseinrichtung eine Mensch-Maschine-Schnittstelle mit den entsprechenden Bedien- und Anzeigeelementen aufweist.

Das oben beschriebene Konzept einer Stromquelle ermöglicht insbesondere die Steuerung modular aufzubauen, beispielsweise, daß jeweils ein eigenes Steuermodul zur Ansteuerung des Stromwandlers und zur Ansteuerung des Zwischenkreisstellers vorgesehen ist. Weiter kann vorgesehen werden, daß die Mensch-Maschine-Schnittstelle in einem eigenen Steuermodul realisiert ist.

Nach einer weiteren Lehre der Erfindung wird ein Verfahren zur Erzeugung eines Schweißstroms mittels eines durch eine Gleichspannung gespeisten Stromwandlers, vorzugsweise eines Resonanzwechselrichters, vorgeschlagen. Der Stromwandler ist dabei mit einem Resonanzschaltkreis und einer Schalteranordnung ausgestattet. Der Resonanzschaltkreis wird über die Schalteranordnung laufend derart aufgeladen und entladen, daß im Ergebnis ein Schweißstrom aus zeitlich aufeinanderfolgenden, i. w. sinusförmigen Stromhalbwellen erzeugt wird. Mit Aufladen des Resonanzschaltkreises ist hier der zeitliche Stromverlauf gemeint, der beim Anlegen einer Spannung an einen Resonanzschaltkreis entsteht und der vor dem ersten Umschwingvorgang auf Null zurückgeht. Das Umschwingen wird hier dadurch vermieden, daß eine Diode in den Resonanzschaltkreis geschaltet ist. Mit Entladen ist vorliegend gemeint, daß die durch das Aufladen in den Resonanzschaltkreis eingebrachte Energie durch einen entsprechenden Stromfluß wieder aus dem Resonanzschaltkreis herausgeführt wird. Bei einem Serien-Resonanzschaltkreis bestehend aus Induktivität und Kapazität entspricht der zeitliche Verlauf des Auflade- bzw. des Entladestroms jeweils einer sinusförmigen Stromhalbwelle.

Bei dem vorliegenden Verfahren werden diese sinusförmigen Halbwellen derart ausgenutzt, daß der Schweißstrom aus zeitlich aufeinanderfolgenden Stromhalbwellen zusammengesetzt wird. Dabei erfolgt das Aufladen und Entladen des Resonanzschaltkreises durch entsprechende Schaltvorgänge in der Schalteranordnung.

Wesentlich ist nun für das beanspruchte Verfahren, daß der Schweißstrom nicht, wie oben bereits beschrieben, ausschließlich durch die Steuerung der Schaltvorgänge in der Schalteranordnung gesteuert wird, sondern zusätzlich vorgesehen ist, den Betrag der Gleichspannung zu ändern und damit eine weitere Steuerungsmöglichkeit des Schweißstroms zu erhalten.

Wesentlich ist für das beanspruchte Verfahren weiter, daß die oben beschriebene Triggereinrichtung vorgesehen ist und daß mittels der Triggereinrichtung nach der Ermittlung des Leerlaufzustands die Schalteranordnung des Stromwandlers mit konstanter Frequenz und reduzierter Auflade- und Entladezeit betrieben wird. Hierdurch läßt sich wiederum die Sättigung im Transformatorkern im Leerlaufzustand vermeiden.

Es darf darauf hingewiesen werden, daß mit der oben genannten Stromquelle sowie mit dem oben genannten Verfahren auch eine Steuerung der Schweißspannung möglich ist.

Im folgenden wird die Erfindung anhand einer lediglich ein Ausführungsbeispiel beschreibenden Zeichnung näher erläutert. In der Zeichnung zeigt
- Fig. 1: ein Blockschaltbild der Stromquelle zum erfindungsgemäßen Verfahren mit den entsprechenden Signalverläufen,
- Fig. 2: in schematischer Darstellung die Schaltung eines nicht erfindungsgemäßen Stromwandlers gemäß Fig. 1 als primär getakteter Resonanzwechselrichter,
- Fig. 3: in schematischer Darstellung die Schaltung des Zwischenkreisstellers gemäß Fig. 1 als Hoch-Tiefsetzsteller,
- Fig. 4: eine graphische Darstellung der zeitlichen Signalverläufe für eine Stromquelle nach Fig. 1,
- Fig. 5: in schematischer Darstellung der Stromwandler der erfindungsgemäßen Stromquelle als primärgetakteter Resonanzwechselrichter.

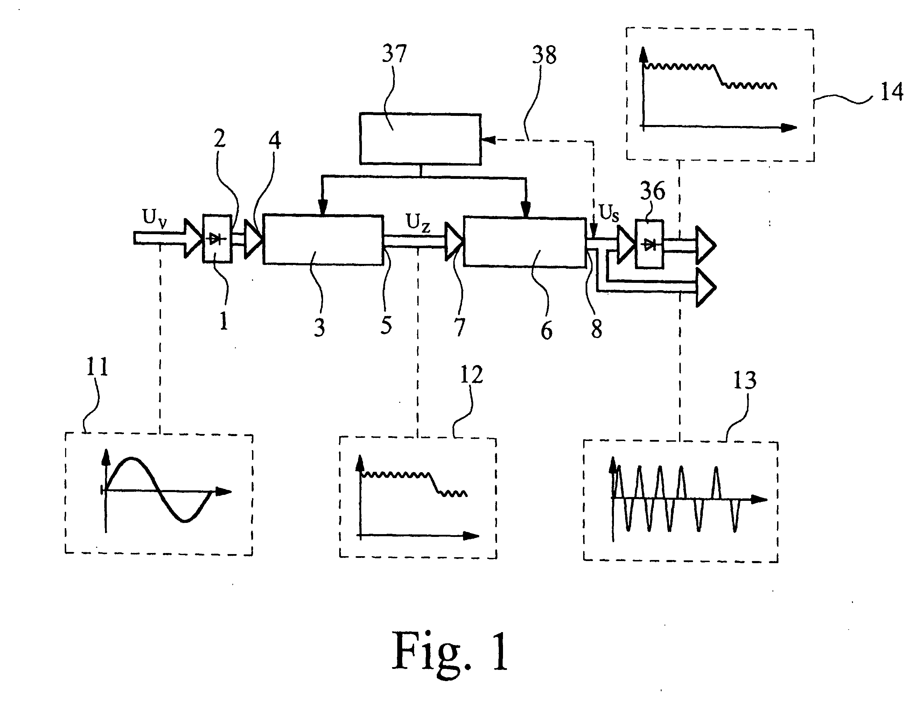

Fig. 1 zeigt den grundlegenden Aufbau der Stromquelle für ein Lichtbogenschweißsystem, das über eine Netzwechselspannung oder Netzdrehspannung Uᵥ gespeist wird. Die Netzspannung Uᵥ liegt an einem Gleichrichter 1 mit einem Gleichspannungsausgang 2 an. Weiter ist ein Zwischenkreis 3 mit Eingang 4 und Ausgang 5 sowie ein getakteter Stromwandler 6 mit Eingang 7 und Ausgang 8 vorgesehen. Der Gleichspannungsausgang 2 ist mit dem Eingang 4 des Zwischenkreises 3 gekoppelt, dessen Ausgang 5 mit dem Eingang 7 des Stromwandlers 6 verbunden ist. An den Ausgang 8 des Stromwandlers 6 ist eine Schweißelektrode anschließbar. Mit "anschließbar" ist vorliegend gemeint, daß die Schweißelektrode unmittelbar mit dem Ausgang 8 des Stromwandlers 6 verbunden sein kann, oder daß weitere Komponenten, beispielsweise ein Gleichrichter oder eine Speicherinduktivität zwischen dem Ausgang 8 und die Elektrode geschaltet werden können.

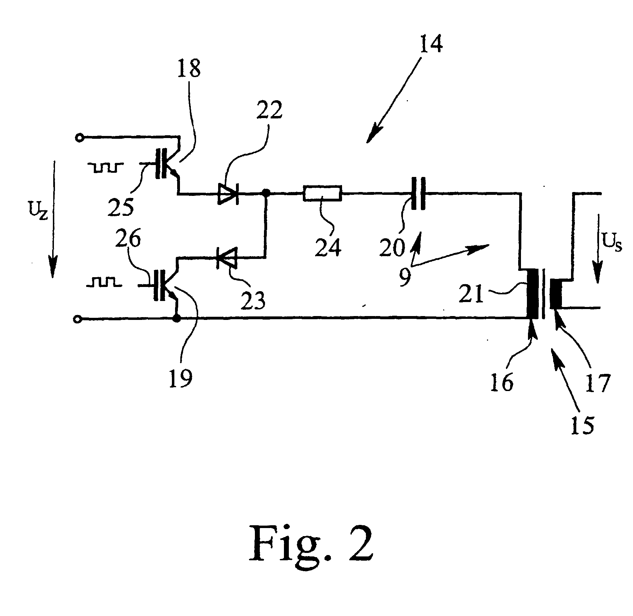

Der Stromwandler 6 beinhaltet einen Resonanzschaltkreis 9, der in Fig. 2 dargestellt ist und noch im Detail beschrieben wird.

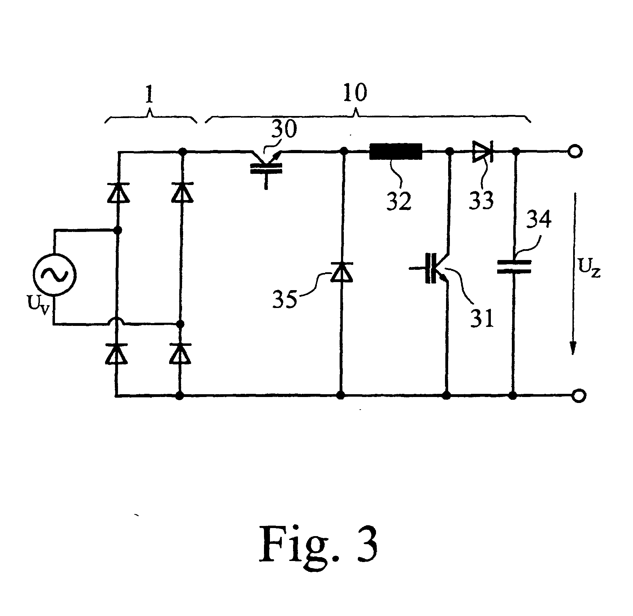

Der Zwischenkreis 3 weist einen Zwischenkreissteller 10 auf, durch den die Spannung U_{z} am Ausgang 5 des Zwischenkreises 3 einstellbar ist (Fig. 3). Die Spannung U_{z} wird im folgenden Zwischenkreisspannung genannt.

Die Diagramme in Fig. 1 zeigen die qualitativen Signale an den genannten Komponenten. Diagramm 11 zeigt die sinusförmige Eingangsspannung Uᵥ, die durch den Gleichrichter 1 und den Zwischenkreis 3 in die im Diagramm 12 dargestellte Gleichspannung gewandelt wird. Am Ausgang 8 des Stromwandlers 6 fließt dann der in Diagramm 13 dargestellte Strom, im folgenden Schweißstrom, der sich aus zeitlich aufeinanderfolgenden, i. w. sinusförmigen Stromhalbwellen zusammensetzt. Diagramm 14 zeigt den Schweißstrom in gleichgerichteter Form.

Der Stromwandler 6 ist als primär getakteter Resonanzwechselrichter 14 ausgestaltet. Ein Prinzipschaltbild des Resonanzwechselrichters 14 zeigt Fig. 2. Der Resonanzwechselrichter 14 weist einen Transformator 15 mit einer Primärseite 16 und einer Sekundärseite 17 auf, durch den eine Übertragung der beim Schweißen benötigten Leistung erfolgt. Weiter ist ein erster Halbleiterschalter 18 und ein zweiter Halbleiterschalter 19 zur Beschaltung des Resonanzschaltkreises 9, der eine Kapazität 20 sowie eine Induktivität 21 aufweist, vorgesehen.

Wie Fig. 2 zu entnehmen ist, ist der erste Halbleiterschalter 18 über eine Diode 22 und der zweite Halbleiterschalter 19 über eine Diode 23 mit dem Resonanzschaltkreis 9 gekoppelt. Beim Schließen des ersten Halbleiterschalters 18 bei gleichzeitig geöffneten zweiten Halbleiterschalter 19 fließt ein Ladestrom über die Diode 22 durch den vom Widerstand 24, der Kapazität 20 und der Induktivität 21 gebildeten Reihenschwingkreis. Da das Umschwingen vorliegend durch die Diode 22 verhindert wird, beschreibt der Strom eine i. w. sinusförmige positive Halbwelle und ist ansonsten Null. Wird der Halbleiterschalter 18 geöffnet und anschließend der Halbleiterschalter 19 geschlossen, so fließt über die Diode 23 ein entgegengesetzter i. w. sinusförmiger Strom. Beim ersten Schaltvorgang wird also die Kapazität 20 aufgeladen, beim zweiten Schaltvorgang wieder entladen. Die Halbleiterschalter 18, 19 weisen jeweils einen Steueranschluß 25, 26 zur Ansteuerung auf. Die Induktivität 21 wird in bevorzugter Ausgestaltung nicht als separates Bauteil vorgesehen, sondern wird durch die Streuinduktivität der Primärseite 16 des Transformators 15 gebildet, wie in Fig. 2 dargestellt.

Durch die wechselseitige Ansteuerung der Halbleiterschalter 18 und 19 ist es möglich, einen Schweißstrom aus zeitlich aufeinanderfolgenden, i. w. sinusförmigen Stromhalbwellen zu erzeugen, wobei die Stromhalbwellen jeweils durch bestimme Pausenzeiten voneinander beabstandet sind. Die Pausenzeiten lassen sich durch die Ansteuerung der Halbleiterschalter 18 und 19 einstellen, wodurch sich wiederum der Effektivwert des Stroms steuern läßt.

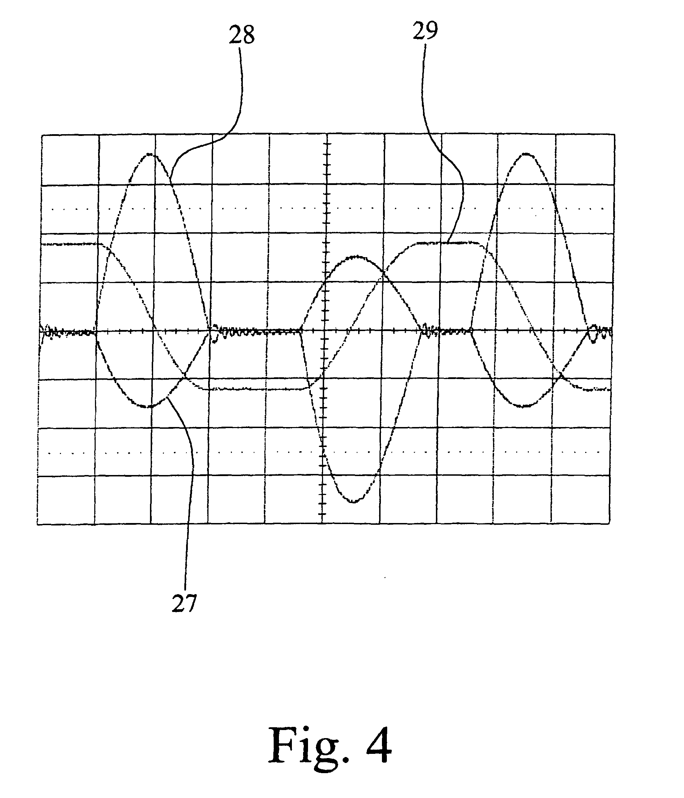

Fig. 4 zeigt ein Meßdiagramm mit dem resultierenden Strom auf der Primärseite 16 des Transformators 15 (Kurve 27) und auf der Sekundärseite 17 des Transformators 15 (Kurve 28). Kurve 29 zeigt die Spannung über dem Kondensator 20. Besonders hervorzuheben ist bei der Betrachtung des Stromverlaufs, daß unter Verwendung eines Reihenschaltkreises die Halbleiterschalter 18 und 19 stets im Nulldurchgang des Stroms geschaltet werden, daß also keine oder nur minimale Schaltverluste entstehen und gleichzeitig steile Schaltflanken vermieden werden.

Im Hinblick auf die Realisierung des Resonanzwechselrichters 14 darf darauf hingewiesen werden, daß die Halbleiterschalter 18, 19 vorzugsweise als IGBT (Insulated Gate Bipolar Transistor) Leistungs-MOSFETs vorgesehen werden, da mit einem IGBT besonders schnell schaltende Schaltelemente mit niedrigem Widerstand, insbesondere für hohe Spannungen realisierbar sind.

Wesentlich ist nun für die vorliegende Stromquelle, daß die Zwischenkreisspannung in einem weiten Bereich durch den Zwischenkreissteller 10 einstellbar ist. Hierfür ist der Zwischenkreissteller 10 in bevorzugter Ausgestaltung als Hochsetzsteller oder als Hoch-Tiefsetzsteller mit variabler Ausgangsspannung ausgestaltet. Das Schaltbild einer möglichen Ausgestaltung eines Hoch-Tiefsetzstellers zeigt Fig. 3. Hier ist ein für sich genommen aus dem Stand der Technik bekannter Hoch-Tiefsetzsteller dargestellt, der über einen ersten Halbleiterschalter 30 und einen zweiten Halbleiterschalter 31 ansteuerbar ist. Bei geschlossenem ersten Halbleiterschalter 30 wirkt die Induktivität 32 mit dem Halbleiterschalter 31 zusammen mit der Diode 33 und der Kapazität 34 als ein Aufwärtswandler. Bei geöffnetem Schalter 31 wirkt der Schalter 30 mit der Diode 35, der Induktivität 32, der Diode 33 und der Kapazität 34 als Abwärtswandler. Damit ist es möglich, durch eine entsprechende Ansteuerung der Halbleiterschalter 30 und 31 sowohl ein Hochsetzen als auch ein Tiefsetzen der gleichgerichteten Versorgungsspannung zu bewirken. Weiter ist es vorgesehen, die Halbleiterschalter 30 und 31 derart anzusteuern, daß ein hoher Leistungsfaktor gewährleistet ist. Bei einer derartigen Ausgestaltung ist der Zwischenkreissteller 10 mit einer PFC-Funktionalität ausgestattet.

Es läßt sich zusammenfassen, daß der von der oben beschriebenen Stromquelle erzeugte Schweißstrom in zwei Freiheitsgraden steuerbar ist. Zum einen ermöglichen die Halbleiterschalter 18 und 19 durch eine entsprechende Ansteuerung eine Steuerung der Pausenzeiten zwischen den Stromhalbwellen, zum anderen ermöglichen die beiden Halbleiterschalter 30 und 31 das Hoch- bzw. Tiefsetzen der Zwischenkreisspannung, die den Resonanzwechselrichter 14 speist.

In besonderer Ausgestaltung ist es weiter vorgesehen, daß dem Ausgang des Stromwandlers 6 bzw. des Resonanzwechselrichters 14 ein Gleichrichter 36 nachgeschaltet ist, der aus den sinusförmigen Stromhalbwellen eine Gleichspannung erzeugt. Hier wird der Vorteil der zusätzlichen Steuermöglichkeit durch die Variation der Zwischenkreisspannung besonders deutlich, wie im allgemeinen Teil der Beschreibung bereits erläutert. Würde nämlich der Schweißstrom allein durch Variation der Pausenzeiten zwischen den Stromhalbwellen gesteuert, so würden bei niedrigen Schweißströmen lange Pausenzeiten entstehen, die bei einem gleichgerichteten Schweißstrom zu einer hohen unerwünschten Welligkeit führen. Dies läßt sich vorliegend dadurch vermeiden, daß die Pausenzeiten niedrig gehalten werden und lediglich die Zwischenkreisspannung abgesenkt wird.

Um die oben genannte Ansteuerung unter anderem der Halbleiterschalter 18, 19, 30 und 31 zu gewährleisten, ist in bevorzugter Ausgestaltung eine Steuerungseinrichtung 37 vorgesehen, die den Zwischenkreissteller 10 und/oder den Stromwandler 6 mit entsprechenden Steuersignalen versorgt. Zunächst ist es dabei vorgesehen, daß die Steuerung der Zwischenkreisspannung am Ausgang 5 des Zwischenkreises 3 durch die Steuerungseinrichtung 37 möglich ist.

In weiterer bevorzugter Ausgestaltung ist es vorgesehen, daß die Schaltzeitpunkte der Halbleiterschalter 18 und 19 des Resonanzwechselrichters 14 durch die Steuerungseinrichtung 37 steuerbar sind. Hierfür ist es erforderlich, zu erkennen, wann eine Stromhalbwelle beendet ist, um entsprechend den einen Halbleiterschalter 18, 19 abzuschalten und den anderen Halbleiterschalter 18, 19 nach einer Pausenzeit einzuschalten. Hierfür ist eine in der Zeichnung nicht dargestellte Meßeinrichtung zum Messen des Ausgangsstroms des Stromwandlers 6 vorgesehen. Es ist aber auch möglich, die Pausenzeit bei eingeschaltetem Halbleiterschalter 18, 19 verstreichen zu lassen und entsprechend den einen Halbleiterschalter 18, 19 erst kurz vor Ablauf der Pausenzeit abzuschalten.

Für die Kopplung zwischen der Steuerungseinrichtung 37 und dem Zwischenkreissteller 10 bzw. dem Stromwandler 6 weisen die beiden anzusteuernden Komponenten vorzugsweise jeweils einen Treiberbaustein auf, der die Steuersignale der Steuerungseinrichtung 37 aufnimmt und entsprechend an die Halbleiterschalter o. dgl. abgibt. Die genannte Kopplung kann durch Lichtwellenleiter realisiert sein, um Störungen durch Einstreuungen zu vermeiden.

Um eine besonders genaue Einstellung des Schweißstroms zu ermöglichen, ist eine Meßeinrichtung am Ausgang 8 des Stromwandlers 6 zum Messen des Schweißstroms auch dafür vorgesehen, daß die Steuerungseinrichtung 37 als Regler für die Regelgröße Schweißstrom arbeiten kann. Hierfür ist die in der Zeichnung nicht dargestellte Meßeinrichtung über eine Rückkopplung 38 mit der Steuerungseinrichtung 37 gekoppelt.

Um dem Benutzer eine möglichst einfache Bedienung zu ermöglichen, weist die Steuerungseinrichtung 37 schließlich eine Mensch-Maschine-Schnittstelle zur Einstellung der gewünschten Schweißparameter sowie zur Überwachung des Schweißprozesses auf.

Durch den modularen Aufbau der beschriebenen Stromquelle (Gleichrichter 1, Zwischenkreis 3, Stromwandler 6) ist es besonders vorteilhaft, die Steuerungseinrichtung 37 ebenfalls modular und insbesondere austauschbar auszugestalten. Für jede einzelne Komponente kann dann ein eigenes Steuerungsmodul realisiert werden, beispielsweise zur Ansteuerung des Resonanzwechselrichters 14 oder zur Ansteuerung des Hoch-Tiefsetzstellers 10. Es ist auch ohne weiteres möglich, ein eigenes Steuerungsmodul für die Mensch-Maschine-Schnittstelle, falls vorhanden, vorzusehen.

Es darf schließlich darauf hingewiesen werden, daß die Stromquelle mit den in der Schweißtechnik üblichen Zusatzfunktionen wie einer Anti-Stick-Funktion oder wie einer Zündfunktion ausgestattet werden kann. Bei der Zündfunktion beispielsweise wird ein hoher kurzfrequenter Spannungsimpuls erzeugt, um einen Lichtbogen an der Schweißelektrode entstehen zu lassen. Vorliegend kann ein derartiger Spannungsimpuls auf einfache Weise dadurch erzeugt werden, daß die Halbleiterschalter 18, 19 des Stromwandlers 6 nicht nach Durchlauf einer Stromhalbwelle bei gegen Null gehendem Strom, sondern während des Durchlaufs einer Stromhalbwelle geschaltet werden, so daß eine große Änderung des Stroms pro Zeiteinheit und damit ein hoher Spannungsimpuls entsteht.

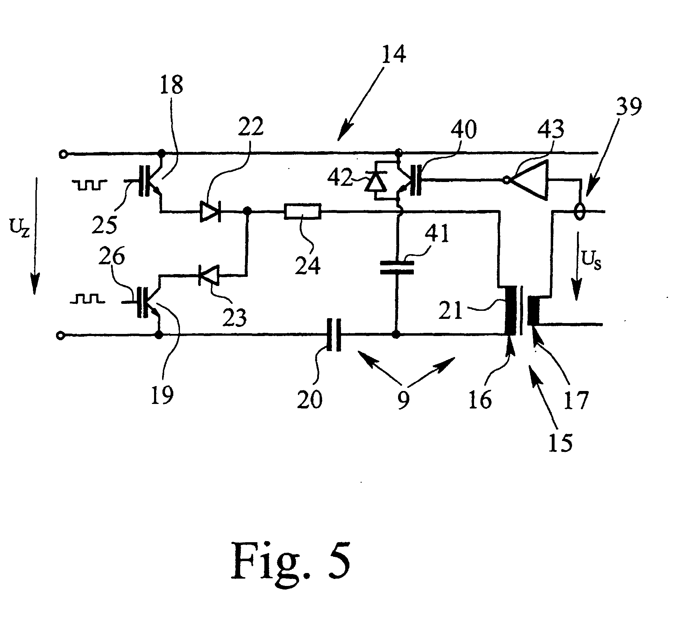

Die in Fig. 5 dargestellte, erfindungsgemäße Ausgestaltung des Resonanzwechselrichters 14 betrifft insbesondere den ungewünschten Effekt der Sättigung im Transformatorkern. Die Sättigung im Transformatorkern ist immer dann zu erwarten, wenn der Stromfluß durch die Wicklung der Sekundärseite 17 des Transformators 15 abreißt, also wenn kein Schweißstrom fließt. Die Sättigung im Transformatorkern führt grundsätzlich zu hohen Verlusten und entsprechend zu einer hohen Belastung der beiden Halbleiterschalter 18, 19.

Verglichen mit dem in Fig. 2 dargestellten Resonanzwechselrichter 14 ist bei dem in Fig. 5 dargestellten Resonanzwechselrichter 14 die Kapazität 20 des Resonanzschaltkreises 9 am anderen Anschluß der Primärseite 16 des Transformators 15 angeordnet. Dies spielt für die vorgeschlagene Lösung allerdings keine Rolle.

Wesentlich ist nun zunächst, daß eine Triggereinrichtung 39 zur Ermittlung des Leerlaufzustands des Stromwandlers 6 vorgesehen ist, in dem wie oben beschrieben die Gefahr der Sättigung im Transformatorkern besonders groß ist. Diese Triggereinrichtung 39 kann eine irgendwie geartete Meßeinrichtung zur Ermittlung des Stroms auf der Sekundärseite 17 des Transformators 15 sein.

Wesentlich ist ferner, daß eine weitere, über einen weiteren Schalter 40 zuschaltbare Kapazität 41 vorgesehen ist, wobei die Kapazität 20 des Resonanzschaltkreises 9 zusammen mit der zugeschalteten weiteren Kapazität 41 einen schaltbaren kapazitiven Spannungsteiler bildet. Der Schalter 40 ist hier wiederum als Halbleiterschalter 40 ausgestaltet. Parallel zum Halbleiterschalter 40 ist eine Diode 42 angeordnet, so daß hier grundsätzlich ein Stromfluß in beide Richtungen möglich ist.

Bei geschlossenem Halbleiterschalter 40 bilden die Kapazität 20 und die Kapazität 41 den oben genannten kapazitiven Spannungsteiler, der an der Zwischenkreisspannung einerseits und an 0V andererseits angeschlossen ist.

Die Induktivität 21 des Resonanzschaltkreises 9, hier die Primärspule des Transformators 15, ist an den Spannungsabgriff des oben genannten schaltbaren kapazitiven Spannungsteilers angeschlossen.

Der weitere Halbleiterschalter 40, durch den der kapazitive Spannungsteiler gewissermaßen aktiv geschaltet werden kann, ist durch die Triggereinrichtung 39 über einen Inverter 43 ansteuerbar. Wenn also auf der Sekundärseite 17 des Transformators 15 der Strom abreißt - Leerlauf -, so schließt der Halbleiterschalter 40 und die Induktivität 21 des Resonanzschaltkreises 9 ist ― wie oben erläutert - am Spannungsabgriff des schaltbaren kapazitiven Spannungsteilers angeschlossen. Dadurch wird die Induktivität 21 des Resonanzschaltkreises 9 beim Schalten der beiden Halbleiterschalter 18, 19 mit einer vergleichsweise geringen Spannung beaufschlagt, die durch das Verhältnis der beiden Kapazitäten 20, 41 zueinander bestimmt wird.

In besonders bevorzugter Ausgestaltung wird im Leerlauf zusätzlich der PWM-Betrieb (Puls-Weiten-Modulation-Betrieb) aktiviert. Dies bedeutet, daß die Schalteranordnung des Stromwandlers 6 nunmehr mit konstanter Frequenz und reduzierter Auflade- und Entladezeit betrieben wird, wobei ein stromloses Schalten wie im oben beschriebenen Schweißbetrieb nicht mehr stattfindet. Eine Überwachung des Stroms auf der Primärseite 16 des Transformators 15 ist entsprechend nicht vorgesehen. Auf der Sekundärseite des Transformators 15 stellt sich im Ergebnis, ähnlich wie bei der oben beschriebenen Zündfunktion, eine Zündspannung ein, die höher ist als die Schweißspannung.

Sobald auf der Sekundärseite 17 des Transformators 15 wieder Strom fließt, beispielsweise wenn der Schweißprozeß wieder aufgenommen wird, erfolgt unmittelbar ein Umschalten vom PWM-Betrieb in den "normalen" weiter oben erläuterten Schweißbetrieb. Der Halbleiterschalter 40 wird geöffnet und die Schalteranordnung des Stromwandlers 6 wird in Abhängigkeit des Primärstroms so betrieben, daß ein stromloses Schalten der beiden Halbleiterschalter 18, 19 gewährleistet ist. Die Erkennung der Aufnahme des Schweißprozesses kann wiederum durch die oben beschriebene Triggereinrichtung 39 erfolgen.

Nach einer weiteren Lehre, der eigenständige Bedeutung zukommt, wird das obige Verfahren zur Erzeugung eines Schweißstroms vorgeschlagen, jedoch ohne im Leerlauf notwendigerweise die Zuschaltung einer zusätzlichen Kapazität 41 über einen zusätzlichen Halbleiterschalter 40 vorzusehen.

Wesentlich ist für dieses Verfahren zunächst, daß der Effektivwert des Schweißstroms durch die Steuerung des Betrags der Gleichspannung einerseits und durch die Steuerung der Schaltvorgänge in der Schalteranordnung, insbesondere durch die Steuerung der Pausenzeiten zwischen zwei Stromhalbwellen, andererseits, gesteuert wird. Weitere Details ergeben sich aus der obigen Beschreibung der beanspruchten Stromquelle.

Wesentlich ist für dieses Verfahren weiter, daß sich die Maßnahmen zur Vermeidung der Sättigung im Transformatorkern im Leerlauf auf den oben beschriebenen speziellen Betrieb der Schalteranordnung mit konstanter Frequenz und reduzierter Auflade- und Entladezeit - PWM-Betriebreduzieren. Dies führt im Ergebnis zu einer besonders einfachen Schaltungsanordnung, wie sie beispielsweise in Fig. 2 gezeigt ist.

Das obige Verfahren ist wiederum mittels eines durch eine Gleichspannung gespeisten Stromwandlers 6, vorzugsweise eines Resonanzwechselrichters 14, durchführbar. Der Stromwandler 6 weist dabei einen Resonanzschaltkreis 9 und eine Schalteranordnung auf, wobei durch das laufende Aufladen und Entladen des Resonanzschaltkreises 9 über die Schalteranordnung ein Schweißstrom aus zeitlich aufeinanderfolgenden, i. w. sinusförmigen Stromhalbwellen erzeugt wird. Das Aufladen und Entladen des Resonanzschaltkreises wird dabei durch entsprechende Schaltvorgänge in der Schalteranordnung ausgelöst (Schaltfrequenz vorzugsweise zwischen 16 und 25 kHZ).

In besonders bevorzugter Ausgestaltung beinhaltet das vorgeschlagene Verfahren auch die weiter oben beschriebenen Maßnahmen zur Vermeidung der Sättigung im Transformatorkern, bei denen die Induktivität 21 des Resonanzschaltkreises 9 mit einer reduzierten Spannung beaufschlagt wird. Auf die obigen Ausführungen darf verwiesen werden.

## Patentansprüche

1. Stromquelle für ein Lichtbogenschweißsystem mit den Komponenten
- netzspannungsgespeister Gleichrichter (1) mit Gleichspannungsausgang (2),
- Zwischenkreis (3) mit Eingang (4) und Ausgang (5),
- getakteter Stromwandler (6) mit Eingang (7) und Ausgang (8),
wobei der Gleichspannungsausgang (2) des Gleichrichters (1) mit dem Eingang (4) des Zwischenkreises (3) gekoppelt ist, wobei der Ausgang (5) des Zwischenkreises (3) mit dem Eingang (7) des Stromwandlers (6) gekoppelt ist, wobei der Stromwandler (6) einen Resonanzschaltkreis (9) zur Erzeugung im wesentlichen sinusförmiger Stromhalbwellen aufweist und wobei an den Ausgang (5) des Stromwandlers (6) eine Schweißelektrode anschließbar ist,
wobei der Zwischenkreis (3) einen Zwischenkreissteller (10) aufweist, wobei die Spannung am Ausgang (5) des Zwischenkreises (3) - Zwischenkreisspannung - durch den Zwischenkreissteller (10) einstellbar ist,
wobei der Stromwandler (6) als primär getakteter Resonanzwechselrichter (14) ausgebildet ist, wobei der Resonanzwechselrichter (14) einen Transformator (15) mit einer Primärseite (16) und einer Sekundärseite (17) aufweist, wobei der Resonanzwechselrichter (14) primärseitig mindestens einen angesteuerten Halbleiterschalter aufweist und wobei der Resonanzschaltkreis (9) eine Kapazität (20) und eine Induktivität (21) aufweist,
**dadurch gekennzeichnet,**
**daß** eine Triggereinrichtung (39) zur Ermittlung des Leerlaufzustands des Stromwandlers (6) vorgesehen ist, daß eine weitere, über einen weiteren Schalter (40) zuschaltbare Kapazität (41) vorgesehen ist, daß die Kapazität (20) des Resonanzschaltkreises (9) zusammen mit der zugeschalteten weiteren Kapazität (41) einen schaltbaren kapazitiven Spannungsteiler bildet, daß die Induktivität (21) des Resonanzschaltkreises (9) an den Spannungsabgriff des schaltbaren kapazitiven Spannungsteilers angeschlossen ist und daß der weitere Schalter (40) durch die Triggereinrichtung (39) ansteuerbar ist.

2. Stromquelle nach Anspruch 1, **dadurch gekennzeichnet, daß** der Resonanzwechselrichter (14) einen ersten Halbleiterschalter (18) und einen zweiten Halbleiterschalter (19) aufweist, vorzugsweise, daß der erste Halbleiterschalter (18) über eine erste Diode (22) o. dgl. und der zweite Halbleiterschalter (19) über eine zweite Diode (23) o. dgl. mit dem Resonanzschaltkreis (9) gekoppelt ist, daß bei geschlossenem ersten Halbleiterschalter (18) Ladestrom - als sinusförmige Stromhalbwelle - über die erste Diode (22) in den Resonanzschaltkreis (9) hineinfließen kann und daß bei geschlossenem zweiten Halbleiterschalter (19) Entladestrom über die zweite Diode (23) aus dem Resonanzschaltkreis (9) herausfließen kann.

3. Stromquelle nach Anspruch 1 oder 2, **dadurch gekennzeichnet, daß** die Induktivität (21) des Resonanzschaltkreises (9) durch die Streuinduktivität der Primärspule des Transformators (15) des Resonanzwechselrichters (14) gebildet wird.

4. Stromquelle nach einem der vorhergehenden Ansprüche, **dadurch gekennzeichnet, daß** der Resonanzschaltkreis (9) als Reihenschwingkreis ausgebildet ist.

5. Stromquelle nach einem der vorhergehenden Ansprüche, **dadurch gekennzeichnet, daß** der Zwischenkreissteller (10) als Hochsetzsteller oder als Hoch-Tiefsetzsteller mit variabler Ausgangsspannung ausgestaltet ist,
und/oder, daß der Zwischenkreissteller (10) mit einer PFC-Funktionalität ausgestattet ist.

6. Stromquelle nach einem der vorhergehenden Ansprüche, **dadurch gekennzeichnet, daß** der Ausgang des Stromwandlers (6) mit einem Gleichrichter (36) gekoppelt ist und daß an den Ausgang des Gleichrichters (36) die Schweißelektrode anschließbar ist.

7. Stromquelle nach einem der vorhergehenden Ansprüche, **dadurch gekennzeichnet, daß** eine Steuerungseinrichtung (37) zur Ansteuerung des Zwischenkreisstellers (10) und/oder des Stromwandlers (6) vorgesehen ist,
vorzugsweise, daß die Zwischenkreisspannung durch die Steuerungseinrichtung (37) steuerbar ist,
und/oder, vorzugsweise, daß die Steuerungseinrichtung (37) eine Mensch-Maschine-Schnittstelle aufweist,
und/oder, vorzugsweise, daß die Steuerungseinrichtung (37) modular aufgebaut ist, insbesondere daß jeweils ein eigenes Steuermodul zur Ansteuerung des Stromwandlers (6) und zur Ansteuerung des Zwischenkreisstellers (10) vorgesehen ist,
vorzugsweise, daß ein eigenes Steuermodul für die Mensch-Maschine-Schnittstelle vorgesehen ist.

8. Stromquelle nach Anspruch 7, **dadurch gekennzeichnet, daß** die Schaltzeitpunkte der Halbleiterschalter (18, 19) des Resonanzwechselrichters (14) durch die Steuerungseinrichtung (37) steuerbar sind.

9. Stromquelle nach Anspruch 7 oder 8, **dadurch gekennzeichnet, daß** eine Meßeinrichtung zur Messung des Ausgangsstroms und/oder der Ausgangspannung des Stromwandlers (6) vorgesehen ist, daß die Meßeinrichtung mit der Steuerungseinrichtung (37) gekoppelt ist und daß die Steuerungseinrichtung (37) als Regler für die Regelgröße Schweißstrom und/oder Schweißspannung ausgebildet ist.

10. Verfahren zur Erzeugung eines Schweißstroms mittels eines durch eine Gleichspannung gespeisten Stromwandlers (6), vorzugsweise eines Resonanzwechselrichters (14), mit einem Resonanzschaltkreis (9) und einer Schalteranordnung, wobei der Stromwandler (6) einen Transformator (15) mit einer Primärseite (16) und einer Sekundärseite (17) aufweist, wobei durch das laufende Aufladen und Entladen des Resonanzschaltkreises (9) über die Schalteranordnung ein Schweißstrom aus zeitlich aufeinanderfolgenden, im wesentlichen sinusförmigen Stromhalbwellen erzeugt wird, wobei das Aufladen und Entladen des Resonanzschaltkreises (9) durch entsprechende Schaltvorgänge in der Schalteranordnung ausgelöst wird,
**dadurch gekennzeichnet,**
**daß** der Effektivwert des Schweißstroms durch die Steuerung des Betrags der Gleichspannung einerseits und durch die Steuerung der Schaltvorgänge in der Schalteranordnung, insbesondere durch die Steuerung der Pausenzeiten zwischen zwei Stromhalbwellen, andererseits, gesteuert wird, **daß** der Leerlaufzustand des Stromwandlers (6) durch eine Triggereinrichtung (39) ermittelt wird und daß nach der Ermittlung des Leerlaufzustands zur Vermeidung von Sättigung im Transformatorkern die Schalteranordnung des Stromwandlers (6) mit konstanter Frequenz und reduzierter Auflade- und Entladezeit betrieben wird.

11. Verfahren nach Anspruch 10, **dadurch gekennzeichnet, daß** nach der Ermittlung des Leerlaufzustands zur Vermeidung von Sättigung im Transformatorkern die Induktivität (21) des Resonanzschaltkreises (9) mit einer reduzierten Spannung beaufschlagt wird.

## Claims

1. A power source for an arc welding system with the components
- mains voltage-supplied rectifier (1) with direct voltage output (2),
- intermediate circuit (3) with input (4) and output (5),
- switched-mode current transformer (6) with input (7) and output (8),
whereby the direct voltage output (2) of the rectifier (1) is coupled with the input (4) of the intermediate circuit (3), whereby the output (5) of the intermediate circuit (3) is coupled with the input (7) of the current transformer (6), whereby the current transformer (6) has a resonance switching circuit (9) for generating essentially sinusoidal current half-waves and whereby a welding electrode can be connected to the output (5) of the current transformer (6),
whereby the intermediate circuit (3) has an intermediate-circuit regulator (10), whereby the voltage at the output (5) of the intermediate circuit (3) - intermediate-circuit voltage - can be regulated by the intermediate-circuit regulator (10),
whereby the current transformer (6) is designed as a primary switched-mode resonance inverter (14), whereby the resonance inverter (14) has a transformer (15) with a primary side (16) and a secondary side (17), whereby the resonance inverter (14) has on the primary side at least one triggered semiconductor switch and whereby the resonance switching circuit (9) has a capacitor (20) and an inductor (21),
**characterised in that**
a trigger device (39) is provided for determining the no-load state of the current transformer (6), that a further capacitor (41) is provided that can be switched on via a further switch (40), that the capacitor (20) of the resonance switching circuit (9) together with the switched-on further capacitor (41) forms a switchable capacitive voltage divider, that the inductor (21) of the resonance switching circuit (9) is connected to the voltage tap of the switchable capacitive voltage divider and that the further switch (40) can be triggered by the trigger device (39).

2. The power source according to claim 1, **characterised in that** the resonance inverter (14) has a first semiconductor switch (18) and a second semiconductor switch (19), preferably that the first semiconductor switch (18) is coupled via a first diode (22) or suchlike and the second semiconductor switch (19) via a second diode (23) or suchlike with the resonance switching circuit (9), that, when first semiconductor switch (18) is closed, charging current - as a sinusoidal current half-wave - can flow via the first diode (22) into the resonance switching circuit (9) and that, when second semiconductor switch (19) is closed, discharging current can flow via the second diode (23) out of the resonance switching circuit (9).

3. The power source according to claim 1 or 2, **characterised in that** the inductor (21) of the resonance switching circuit (9) is formed by the leakage inductance of the primary coil of the transformer (15) of the resonance inverter (14).

4. The power source according to any one of the preceding claims, **characterised in that** the resonance switching circuit (9) is designed as a series resonant circuit.

5. The power source according to any one of the preceding claims, **characterised in that** the intermediate-circuit regulator (10) is designed as a step-up converter or as a step-up/step-down converter with variable output voltage,
and/or that the intermediate-circuit regulator (10) is provided with a PFC functionality.

6. The power source according to any one of the preceding claims, **characterised in that** the output of the current transformer (6) is coupled with a rectifier (36) and that the welding electrode can be connected to the output of the rectifier (36).

7. The power source according to any one of the preceding claims, **characterised in that** a control device (37) is provided for the triggering of the intermediate-circuit regulator (10) and/or the current transformer (6),
preferably, that the intermediate-circuit voltage can be controlled by the control device (37),
and/or, preferably, that the control device (37) has a man-machine interface,
and/or, preferably, that the control device (37) has a modular design, in particular that in each case a separate control module is provided for the triggering of the current transformer (6) and for the triggering of the intermediate-circuit regulator (10),
preferably, that a separate control module is provided for the man-machine interface.

8. The power source according to claim 7, **characterised in that** the switching instants of the semiconductor switches (18, 19) of the resonance inverter (14) can be controlled by the control device (37).

9. The power source according to claim 7 or 8, **characterised in that** a measuring device is provided for the measurement of the output current and/or the output voltage of the current transformer (6), that the measuring device is coupled with the control device (37) and that the control device (37) is designed as a controller for the control variable welding current and/or welding voltage.

10. A method for the generation of a welding current by means of a current transformer (6) supplied by a direct voltage, preferably a resonance inverter (14), with a resonance switching circuit (9) and a switch arrangement, whereby the current transformer (6) has a transformer (15) with a primary side (16) and a secondary side (17), whereby a welding current is generated from temporally successive, essentially sinusoidal current half-waves as a result of the continuous charging and discharging of the resonance switching circuit (9) via the switch arrangement, whereby the charging and discharging of the resonance switching circuit (9) is triggered by suitable switching operations in the switch arrangement,
**characterised in that**
the root mean square value of the welding current is controlled by controlling the magnitude of the direct voltage on the one hand and by controlling the switching operations in the switch arrangement, in particular by controlling the currentless times between two current half-waves, on the other hand, that the no-load state of the current transformer (6) is determined by a trigger device (39) and that, after the determination of the no-load state, the switch arrangement of the current transformer (6) is operated with constant frequency and reduced charging and discharging time in order to avoid saturation in the transformer core.

11. The method according to claim 10, **characterised in that**, after determination of the no-load state, a reduced voltage is applied to the inductor (21) of the resonance switching circuit (9) in order to avoid saturation in the transformer core.

## Revendications

1. Source de courant pour un système de soudage à l'arc comportant:
- un redresseur (1) alimenté en tension de réseau avec une sortie de tension continue (2),
- un circuit intermédiaire (3) avec une entrée (4) et une sortie (5)
- un transformateur de courant (6) synchronisé avec une entrée (7) et une sortie (8),
dans lequel la sortie de tension continue (2) du redresseur (1) est couplée à l'entrée (4) du circuit intermédiaire (3), dans lequel la sortie (5) du circuit intermédiaire (3) est couplée à l'entrée (7) du transformateur de courant (6), dans lequel le transformateur de courant (6) présente un circuit résonnant (9) pour produire essentiellement des demi-ondes de courant de forme sinusoïdale et dans lequel une électrode de soudure peut être connectée à la sortie (5) du transformateur de courant (6),
dans lequel le circuit intermédiaire (3) présente un actionneur de circuit intermédiaire (10), dans lequel la tension à la sortie (5) du circuit intermédiaire (3) - tension de circuit intermédiaire- peut être réglée par l'actionneur de circuit intermédiaire (10),
dans lequel le transformateur de courant (6) est configuré comme un onduleur résonnant (14) synchronisé primaire, dans lequel l'onduleur résonnant (14) présente un transformateur (15) avec un côté primaire (16) et un côté secondaire (17), dans lequel l'onduleur résonnant (14) présente du côté primaire au moins un commutateur à semi-conducteurs commandé et dans lequel le circuit résonnant (9) présente une capacitance (20) et une inductance (21),
**caractérisé en ce que**,
un dispositif déclencheur (39) pour détecter le fonctionnement à vide du transformateur de courant (6) est prévu, une autre capacitance (41)connectée par un autre commutateur (40) est prévue, la capacitance (20) du circuit résonnant (9) forme conjointement avec l'autre capacitance (41) connectée en supplément un diviseur de tension capacitif commutable, l'inductance (21) du circuit résonnant (9) est connectée à la prise de courant du diviseur de tension capacitif commutable et le commutateur supplémentaire (40) peut être commandé par le dispositif déclencheur (39).

2. Source de courant selon la revendication 1, **caractérisée en ce que** l'onduleur résonnant (14) présente un premier commutateur à semi-conducteurs (18) et un deuxième commutateur à semi-conducteurs (19), **en ce que**, de préférence, le premier commutateur à semi-conducteurs (18) est couplé par une première diode (22) ou similaire et le deuxième commutateur à semi-conducteurs (19) est couplé par une deuxième diode (23) ou similaire au circuit résonnant (9), **en ce que**, lorsque le premier commutateur à semi-conducteurs (18) est fermé, un courant de charge - sous la forme de demi-ondes sinusoïdales- peut circuler dans le circuit résonnant (9) par l'intermédiaire de la première diode (22) et, lorsque le deuxième commutateur à semi-conducteurs (19) est fermé, un courant de décharge peut sortir du circuit résonnant (9) par l'intermédiaire de la deuxième diode (23).

3. Source de courant selon la revendication 1 ou 2, **caractérisée en ce que** l'inductance (21) du circuit résonnant (9) est formée par l'inductance de fuite de la bobine primaire du transformateur (15) de l'onduleur résonnant (14).

4. Source de courant selon une des revendications précédentes, **caractérisée en ce que** le circuit résonnant (9) est configuré comme un circuit résonnant en série.

5. Source de courant selon une des revendications précédentes, **caractérisée en ce que** l'actionneur de circuit intermédiaire (10) est conçu comme un convertisseur élévateur ou un convertisseur élévateur-abaisseur à tension de sortie variable,
et/ou **en ce que** l'actionneur de circuit intermédiaire (10) est équipé d'une fonctionnalité PFC.

6. Source de courant selon une des revendications précédentes, **caractérisée en ce que** la sortie du transformateur de courant (6) est couplée à un redresseur (36) et **en ce que** l'électrode de soudure peut être connectée à la sortie du redresseur (36).

7. Source de courant selon une des revendications précédentes, **caractérisée en ce qu'**un dispositif de commande (37) pour commander l'actionneur de circuit intermédiaire (10) et/ou le transformateur de courant (6) est prévu,
de préférence, **caractérisé en ce que** la tension de circuit intermédiaire est commandée par le dispositif de commande (37),
et/ou, de préférence, **en ce que** le dispositif de commande (37) présente une interface homme-machine,
et/ou, de préférence, **en ce que** le dispositif de commande (37) est conçu de manière modulaire, notamment **en ce qu'**un module de commande spécifique est respectivement prévu pour commander le transformateur de courant (6) et pour commander l'actionneur de circuit intermédiaire (10),
**en ce que**, de préférence, un module de commande spécifique est prévu pour l'interface homme-machine.

8. Source de courant selon la revendication 7, **caractérisée en ce que** les moments de commutation du commutateur à semi-conducteurs (18,19) de l'onduleur résonnant (14) peuvent être commandés par le dispositif de commande (37).

9. Source de courant selon la revendication 7 ou 8, **caractérisée en ce qu'**un dispositif de mesure pour mesurer le courant de sortie et/ou la tension de sortie du transformateur de courant (6) est prévu, **en ce que** le dispositif de mesure est couplé au dispositif de commande (37) et **en ce que** le dispositif de commande (37) est réalisé comme un régulateur de la grandeur de réglage du courant de soudure et/ou de la tension de soudure.

10. Procédé pour produire un courant de soudure au moyen d'un transformateur de courant (6) alimenté en tension continue, de préférence un onduleur résonnant (14), comportant un circuit résonnant (9) et un agencement de commutateurs, dans lequel le transformateur de courant (6) présente un transformateur (15) avec un côté primaire (16) et un côté secondaire (17), dans lequel la charge et la décharge du circuit résonnant (9) par l'intermédiaire de l'agencement de commutateurs produit un courant de soudure constitué de demi-ondes essentiellement sinusoïdales, se suivant temporellement les unes les autres, dans lequel la charge et la décharge du circuit résonnant (9) sont déclenchées par des processus de commutation correspondants dans l'agencement de commutateurs,
**caractérisé en ce que**,
la valeur effective du courant de soudure est commandée par la commande de la tension continue d'une part et par la commande des processus de commutation dans l'agencement de commutateurs, notamment par la commande des temps de pause entre deux demi-ondes de courant d'autre part, **en ce que** le fonctionnement à vide du transformateur de courant (6) est détecté par un dispositif déclencheur (39) et **en ce que**, après la détection du fonctionnement à vide, l'agencement de commutateurs du transformateur de courant (6) est mis en service à une fréquence constante et des temps de charge/décharge réduits afin d'éviter l'effet de saturation dans le noyau de transformateur.

11. Procédé selon la revendication 10, **caractérisé en ce que**, après la détection du fonctionnement à vide, l'inductance (21) du circuit résonnant (9) est sollicitée par une tension réduite afin d'éviter l'effet de saturation dans le noyau de transformateur.
